# EUROPÄISCHE PATENTSCHRIFT

(11) **EP 2 313 293 B1**
(45) Veröffentlichungstag und Bekanntmachung des Hinweises auf die Patenterteilung: **10.04.2013**
(21) Anmeldenummer: 09776135.7
(22) Anmeldetag: 11.08.2009
(51) Int. Cl.: B60R 19/34

(54) **ABSORBERELEMENT FÜR AUFPRALLENERGIE**
ABSORBER ELEMENT FOR IMPACT ENERGY
ÉLÉMENT ABSORBANT L'ÉNERGIE GÉNÉRÉE LORS D'UNE COLLISION

(30) Priorität: 20.08.2008 DE 102008041373
(43) Veröffentlichungstag der Anmeldung: 27.04.2011
(73) Patentinhaber: ZF Friedrichshafen AG, 88038 Friedrichshafen (DE)
(72) Erfinder: HILLEN, Alois, 56865 Blankenrath (DE)
(86) Internationale Anmeldenummer: PCT/DE2009/050041
(87) Internationale Veröffentlichungsnummer: WO 2010/020243

(56) Entgegenhaltungen:
- DE-A1- 3 711 692
- DE-A1-102004 036 929
- US-A1- 2004 169 383

## Beschreibung

Die Erfindung betrifft ein Absorberelement zur Absorption bei einem Aufprall auftretender Energie. Sie bezieht sich auf ein auch als Crash-Box bezeichnetes Absorberelement, welches vorzugsweise zur Anordnung zwischen der Karosserie eines Kraftfahrzeugs und dem Querträger eines Stoßfängers vorgesehen ist und dazu dient, die bei einem Aufprall auf ein zu schützendes .Objekt, wie beispielsweise ein Kraftfahrzeug, einwirkende Energie durch eine Verformung das Absorberelement ausbildender Teile zumindest teilweise zu absorbieren.

Es ist seit langem bekannt, die bei einem Aufprall auf ein Objekt einwirkende Energie durch Umwandlung in Verformungsarbeit zu absorbieren. Mit diesem Ziel werden an Kraftfahrzeugen beispielsweise so genannte Knautsch-Zonen ausgebildet. Auch die an Kraftfahrzeugen angeordneten, als Aufprallschutz beziehungsweise Prallelement wirkenden Stoßfänger dienen der Absorption bei einem Aufprall auftretender Kräfte. Die Absorption der Kräfte wird zum einen durch die Ausbildung der Stoßfänger aus elastischen Materialien und zum anderen durch die Art ihrer Befestigung an der Fahrzeugkarosserie erreicht. Dabei ist es im Kraftfahrzeugbau üblich geworden, zwischen der Fahrzeugkarosserie und dem Stoßfänger speziell ausgebildete Absorberelemente (Crash-Boxen) anzuordnen. Diese Absorberelemente weisen einen Aufbau und eine Geometrie auf, welche darauf ausgelegt sind, einen möglichst großen Anteil der bei einem Aufprall auftretenden Energie durch eine Verformung der Absorberelemente zu absorbieren.

Ein gattungsgemäßes Absorberelement ist unter dem Titel "Pralldämpferanordnung" beispielsweise in der DE 10 2004 036 929 A1 beschrieben. Die in der Schrift offenbarte Anordnung besteht aus einem sich ausgehend von einer Flanschplatte in das Innere eines hohlen Längsholmes der Fahrzeugkarosserie erstreckenden äußeren Rohr und einem in dem äußeren Rohr geführten inneren Rohr, an dem über eine stirnseitige Platte der Stoßfänger angeordnet ist. In einem Abschnittsbereich des Außenrohrs ist dabei eine Einengung ausgebildet, in welcher ein Ende des Innenrohrs geführt wird, welches eine hierzu korrespondierende Einschnürung aufweist. Bei einem Aufprall wird das innere Rohr in das äußere Rohr hineingedrückt, wobei ein gegenüber der Einschnürung breiterer Abschnitt des hohlzylindrischen Innenrohrs auf den verengten Querschnitt des Außenrohrs trifft. In der Folge wird der ursprünglich breitere Abschnitt des inneren Rohrs durch den Aufprall insoweit verformt, als sich sein Durchmesser an den Innendurchmesser des verengten Abschnitts des Außenrohrs angleicht. Hierdurch wird die in axialer Richtung über den Stoßfänger auf das Innenrohr wirkende Aufprallkraft absorbiert. Das in der Schrift beschriebene Absorberelement ist zwar im Hinblick auf die Absorption auftretender Aufprallkräfte durchaus wirkungsvoll. Dem steht jedoch der Nachteil entgegen, dass das Innenrohr zur Bewerkstelligung der vorgesehenen Funktionsweise des Absorberelements einen verhältnismäßig großen Durchmesser aufweisen muss. Hierdurch ergibt sich für das Absorberelement eine vergleichsweise große Masse, welche zum einen im Hinblick auf die Materialkosten bei der Fertigung des Absorberelements nachteilig ist, zum anderen aber dem Bestreben der Fahrzeughersteller entgegenläuft, die Masse der Kraftfahrzeuge unter ökologischen Gesichtspunkten zu reduzieren. Aus fertigungstechnischer Sicht ist es ferner als ein Nachteil anzusehen, dass das Innenrohr und das Außenrohr der Dämpferanordnung eine vergleichsweise komplizierte geometrische Form aufweisen.

Aufgabe der Erfindung ist es, eine alternative Lösung für ein gattungsgemäßes Absorberelement bereitzustellen. Dabei soll das entsprechende Absorberelement im Hinblick auf die Reduzierung von Fertigungskosten einen möglichst einfachen Aufbau aufweisen, aber dennoch so gestaltet sein, dass es ein weitgehend lineares Absorptionsverhalten über einen möglichst großen Verformungsweg aufweist. Vorzugweise soll durch eine geeignete Gestaltung des Absorberelements außerdem eine Reduzierung seiner Masse gegenüber aus dem Stand der Technik bekannten Lösungen erreicht werden.

Die Aufgabe wird durch ein Absorberelement mit den Merkmalen des Hauptanspruchs gelöst. Vorteilhafte Aus- beziehungsweise Weiterbildungen der Erfindung sind durch die Unteransprüche gegeben.

Das zur Lösung der Aufgabe vorgeschlagene Absorberelement, welches zwischen einem zu schützenden Objekt und einem Prallelement anzuordnen ist, besteht mindestens aus einer Flanschplatte und einem Verformungskörper. Das Absorberelement ist mittels der Flanschplatte unter Abdeckung eines Hohlraums an dem zu schützenden Objekt zu befestigen und an einem der Flanschplatte gegenüberliegenden axialen Ende des Verformungskörpers mit dem Prallelement zu verbinden. Bei dem zu schützenden Objekt kann es sich entsprechend den Darstellungen zum Stand der Technik beispielsweise um ein Kraftfahrzeug handeln, wobei das Absorberelement zwischen der Fahrzeugkarosserie und einem in diesem Falle das Prallelement bildenden Stoßfänger des Kraftfahrzeugs einzufügen ist. Dabei wird das Absorberelement mit seiner Flanschplatte vorzugsweise an einem in Richtung der Flanschplatte offenen Längsträger des Fahrzeugs montiert. Der insoweit durch den offenen Längsträger gegebene Hohlraum wird dabei von der Flanschplatte abgedeckt.

Erfindungsgemäß besteht der Verformungskörper aus einem hohlzylindrischen Innenrohr, einem Stülprohr mit einem nach außen gestülpten Abschnitt und einem Außentopf, welche derart teilweise ineinander verschachtelt sind, dass ein mit dem Prallelement zu verbindender Abschnitt des Innenrohrs außerhalb des Stülprohrs und des Außentopfes angeordnet ist und das Innenrohr an seiner der Flanschplatte zugewandten Seite in den Außentopf sowie im weiteren Verlauf seiner axialen Erstreckung zumindest in eine Öffnung des Stülprohrs hineinragt. Das Stülprohr ist dabei ebenfalls teilweise in dem Außentopf angeordnet, ragt jedoch mit seinem umgestülpten Abschnitt, durch den ein doppelwandiger Bereich des Stülprohrs gebildet ist, aus dem Außentopf heraus, wobei es in Richtung seines Herausragens aus dem Außentopf offen ist. Das Innenrohr ist stoffschlüssig mit der in Richtung des Prallkörpers weisenden Öffnung des Stülprohrs und im Bereich seines Eintritts in den Außentopf stoffschlüssig mit dem Außentopf verbunden. Die Ausbildung und Anordnung der den Verformungskörper bildenden Bestandteile des Absorberelements ist zudem derart, dass das dem Prallelement abgewandte Ende des Außentopfes an der Flanschplatte mit dem auf dieser Seite offenen, aus dem Außentopf herausragenden und in Richtung des vorgenannten Endes des Außentopfes umgestülpten Abschnitt des Stülprohrs verbunden ist.

Insbesondere aufgrund der einfachen Geometrie seines Innenrohrs weist das erfindungsgemäße Absorberelement einen vergleichsweise einfachen Aufbau auf. Ein besonderer Vorteil des erfindungsgemäßen Absorberelements besteht darin, dass durch die Art der Ausbildung des Verformungskörpers, insbesondere durch die Kombination des Außentopfes und des gewissermaßen einen bereits verformten Topf darstellenden Stülprohrs, für das Absorptionsverhalten des Absorberelements eine sehr gleichmäßige Kennlinie erhalten wird, bei welcher der über den Verformungsweg aufgetragene Krafteintrag über einen großen Verformungsbereich hinweg weitgehend linear und parallel zu der das Verformungsmaß abbildenden Abszisse verläuft.

Grundsätzlich ist es möglich, sowohl den Außentopf als auch das Stülprohr zylindrisch, das heißt mit einem gleichbleibenden Querschnitt auszubilden. Damit sich jedoch der Außentopf und das Stülprohr bei einer im Falle eines Aufpralls in der axialen Hauptrichtung auf sie einwirkenden Kraft zur Umwandlung der Aufprallenergie in Verformungsarbeit, durch Einfalten des Außentopfes einerseits und Rückverformung des insoweit ebenfalls topfartigen aber bereits bei der Fertigung erstmals verformten Stülprohrs andererseits, verformen können, wäre es in diesem Falle erforderlich, im Bereich ihrer stoffschlüssigen Verbindung mit dem Innenrohr größere, sich radial nach innen erstreckende Kragen auszubilden. Der Außentopf und das Stülprohr müssten dann aber einen vergleichsweise großen Durchmesser aufweisen, was jedoch mit Blick auf eine ebenfalls gewünschte Gewichtsreduktion eher ungünstig ist. Gemäß einer bevorzugten Ausbildungsform sind daher der Außentopf und/oder das Stülprohr in Richtung der Flanschplatte in ihrem Querschnitt konisch erweitert. Hierdurch wird ihre entsprechende Verformung bei einem Aufprall begünstigt.

Im Hinblick auf die Ausbildung der Flanschplatte sind zwei grundsätzliche Ausbildungsformen des erfindungsgemäßen Absorberelements möglich. Bei einer dieser Ausbildungsformen ist die Flanschplatte durch eine zwischen dem Außentopf an seinem dem Prallelement abgewandten Ende und dem nach außen gestülpten Abschnitt des Stülprohrs angeordnete, das heißt zusätzlich eingefügte Platte ausgebildet. Dabei ist die entsprechende Platte auf ihrer dem Prallelement zugewandten Seite stoffschlüssig mit dem Außentopf und auf ihrer dem Prallelement abgewandten Seiten über den Rand des umgestülpten Abschnitts stoffschlüssig mit dem Stülprohr verbunden. Das Stülprohr ragt bei dieser Ausbildungsform durch eine in der Flanschplatte ausgebildete Ausnehmung in den Außentopf hinein. Wie bereits ausgeführt, besteht zwischen den beiden einander gegenüberliegenden Seiten der als Flanschplatte zusätzlich eingefügten Platte einerseits eine stoffschlüssige Verbindung mit dem Außentopf und andererseits eine stoffschlüssige Verbindung mit dem Stülprohr. Der Außentopf und das Stülprohr sind somit an der Flanschplatte, nämlich indirekt über die zusätzlich eingefügte Platte, miteinander verbunden.

Die andere Ausbildungsform ist dadurch gegeben, dass die Flanschplatte von einem an dem Außentopf auf seiner dem Prallelement abgewandten Seite und/oder von einem am Ende des umgestülpten Abschnitts an das Stülprohr angeformten, sich quer zur Längsachse des Absorberelements radial nach außen erstreckenden Kragen gebildet ist. Dabei können wahlweise der Außentopf oder das Stülprohr oder auch beide genannten Teile des Verformungskörpers eine entsprechende Auskragung aufweisen. In jedem Falle sind die beiden Teile des Verformungskörpers, nämlich der Außentopf und das Stülprohr, bei dieser Ausbildungsform an dem oder den Kragen unmittelbar stoffschlüssig miteinander verbunden.

Dadurch, dass bei der zuletzt beschriebenen Ausbildungsform des Absorberelements auf eine gesonderte Flanschplatte verzichtet wird und diese durch Teile des Außenrohrs und/oder des Stülprohrs ausgebildet ist, wird vorteilhafterweise durch die Einsparung eines Bauteils eine weitere Reduzierung der Fertigungs- beziehungsweise Logistikkosten erreicht.

Bei einer vorteilhaften Weiterbildung des erfindungsgemäßen Absorberelements ist das Innenrohr über die Öffnung des Stülprohrs hinaus verlängert und ragt bis zu dem umgestülpten Abschnitt des Stülprohrs in dieses hinein. Hierdurch kann das Absorberelement in vorteilhafter Weise höhere Querkräfte aufnehmen. Bei einem Absorberelement mit einem in Richtung der Flanschplatte sich in seinem Querschnitt konisch erweiternden Stülprohr lässt sich dieser Vorteil noch dadurch vergrößern, dass das Innenrohr in seinem in das Stülprohr hineinragenden Abschnitt, korrespondierend mit dem Stülprohr ebenfalls konisch erweitert ist. Vorteilhafterweise liegt dabei die äußere Mantelfläche des Innenrohrs in dem in das Stülprohr hineinragenden Abschnitt zumindest größtenteils an der Innenfläche des Stülprohrs an.

Das Absorberelement kann je nach den Anforderungen beziehungsweise Gegebenheiten am Einbauort in unterschiedlicher Weise zur Verbindung des Innenrohrs mit dem Prallelement ausgebildet sein. Gemäß einer vorgesehene Ausbildungsform ist zur Verbindung mit dem Prallkörper an dem der Flanschplatte abgewandten Ende des Innenrohrs eine stoffschlüssig mit dem Innenrohr verbundene, sich quer oder geneigt zur Längsachse des Innenrohrs erstreckende und das Innenrohr verschließende Halteplatte angeordnet. Über diese Halteplatte kann das Absorberelement beziehungsweise sein Innenrohr zum Beispiel durch Verschrauben an dem Prallelement, beispielsweise dem Querträger des Stoßfängers eines Kraftfahrzeugs, befestigt werden.

Das erfindungsgemäße Absorberelement kann entweder aus Stahl oder, in Abhängigkeit des jeweils zu findenden Kosten-Gewichts-Kompromisses auch aus Aluminium bestehen. Der Stoffschluss zwischen den Teilen des Absorberelements ist vorzugsweise jeweils durch eine Schweißverbindung gegeben.

Die Erfindung soll nachfolgend anhand von Ausführungsbeispielen näher erläutert werden. Die zugehörigen Zeichnungen zeigen Ausbildungsformen eines vorzugsweise bei einem Kraftfahrzeug zwischen dessen Karosserie und dem Stoßfänger anzuordnenden Absorberelements. Im Einzelnen zeigen:
- Fig. 1a:: eine erste mögliche Ausbildungsform des erfindungsgemäßen Absorberelements in einer Schnittdarstellung,
- Fig. 1b:: das Absorberelement gemäß Fig. 1a in einer räumlichen Darstellung,
- Fig. 2:: eine gegenüber der Ausbildungsform nach Fig. 1a geringfügig modifizierte Ausbildungsform des Absorberelements,
- Fig. 3:: eine das Absorptionsverhalten des Absorberelements darstellende Kennlinie.

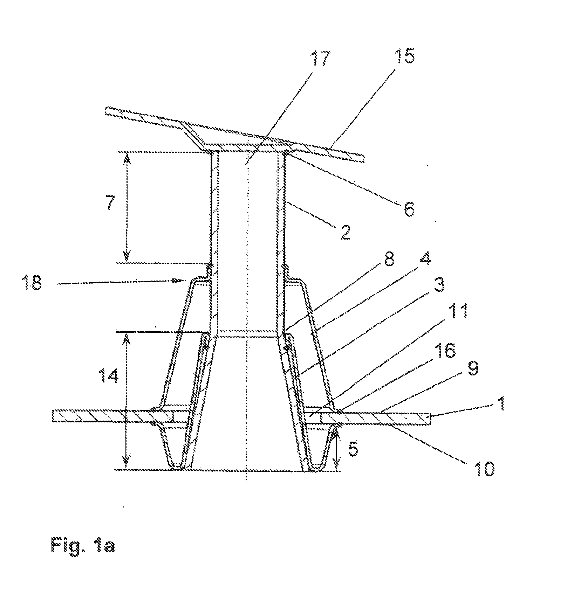

Die Fig. 1a zeigt eine mögliche Ausbildungsform des erfindungsgemäßen Absorberelements in einer Schnittdarstellung mit einem entlang der Längsachse 17 geführten Schnitt. Das dargestellte Absorberelement wird im Wesentlichen von der Flanschplatte 1 und dem von der Flanschplatte 1 aufragenden Verformungskörper 2, 3, 4 ausgebildet. Dem Grundgedanken der Erfindung folgend, besteht der Verformungskörper 2, 3, 4 aus einem hohlzylindrischen Innenrohr 2, einem Außentopf 4 und einem Stülprohr 3 mit einem nach außen gestülpten Abschnitt 5, welche, wie aus der Abbildung ersichtlich, in besonderer Weise teilweise ineinander verschachtelt angeordnet sind. Mittels der Flanschplatte 1 wird das für den Einsatz an einem Kraftfahrzeug vorgesehene Absorberelement an einem durch ein Hohlprofil ausgebildeten Längsträger des Kraftfahrzeugs befestigt. Hierbei deckt die Flanschplatte 1 den Hohlraum des zur Flanschplatte hin offenen Längsträgers ab, wobei das den Hohlraum einfassende Profil des Längsträgers bezüglich der zur Längsachse 17 orthogonalen Richtung in einem geringfügigem Abstand zu dem nach außen gestülpten Bereich des Stülprohrs 3 an der Flanschplatte 1 zur Anlage gelangt, so dass sich die Flanschplatte 1 mit nahezu ihrer gesamten Fläche gleichzeitig an der Stirnseite des Längsträgers abstützt. Auf der der Flanschplatte 1 gegenüberliegenden Seite des Absorberelements beziehungsweise seines Verformungskörpers 2, 3, 4 ist bei dem in der Figur dargestellten Ausführungsbeispiel an dem entsprechenden axialen Ende 6 des Innenrohrs 2 eine Halteplatte 15 angeordnet und durch eine Schweißnaht mit dem Innenrohr 2 verbunden. An dieser Halteplatte 15 wird beim bestimmungsgemäßen Einbau des Absorberelements der Querträger eines Stoßfängers montiert.

Aus der Abbildung wird deutlich, dass die Verschachtelung der den Verformungskörper 2, 3, 4 ausbildenden Teile, nämlich des Innenrohrs 2, des Außentopfes 4 und des Stülprohrs 3, derart ist, dass das Innenrohr 2 auf der Seite der mit dem Prallkörper beziehungsweise Stoßfänger zu verbindenden Halteplatte 15 mit einem Abschnitt 7 aus dem Stülprohr 3 und dem Außentopf 4 herausragt, während es auf der anderen Seite, also auf seiner der Flanschplatte 1 zugewandten Seite, in den Außentopf 4 und in seiner weiteren Erstreckung in das Stülprohr 3 hineinragt. Gleichzeitig ragt dabei das Stülprohr 3 über eine Ausnehmung 11 der Flanschplatte 1 teilweise in den Außentopf 4 hinein. Jeweils im Bereich seines Eintritts in den Außentopf 4 beziehungsweise in das Stülprohr 3 ist das Innenrohr 2 mit den vorgenannten Teilen durch eine Schweißverbindung stoffschlüssig verbunden. Der Außentopf 4 ist an der dem (nicht gezeigten) Prallelement zugewandten Seite 9 der Flanschplatte 1 und das Stülprohr 3 an der dem Prallelement abgewandten Seite 10 der Flanschplatte 1 mit der Flanschplatte 1 durch eine Schweißverbindung verbunden. Mithin sind auch der Außentopf 4 und das Stülprohr 3 über die als Flanschplatte 1 eingefügte Platte miteinander verbunden. Bei der beispielhaft gezeigten Ausbildungsform des Absorberelements erweitern sich sowohl der Außentopf 4 als auch das Stülprohr 3 konisch in Richtung der Flanschplatte 1. In seinem in das Stülprohr 3 hineinragenden Abschnitt 14 ist das Innenrohr 2 ebenfalls konisch ausgebildet, wobei der Verlauf seines Querschnitts im Wesentlichen dem des Querschnitts des Stülprohrs 3 folgt und der Außenmantel des Innenrohrs 2 nahezu vollständig an der Innenfläche des Stülprohrs 3 anliegt. Durch diese Ausbildungsform können von dem Absorberelement auch verhältnismäßig große Querkräfte aufgenommen werden.

Die bei einem Aufprall im Wesentlichen in der axialen Richtung, das heißt in Richtung der Längsachse 17 über den nicht gezeigten Prallkörper und die zur Verbindung mit diesem Prallkörper vorgesehene Halteplatte 15 in das Absorberelement eingetragene Aufprallenergie wird dadurch absorbiert, dass das Innenrohr 2 in Richtung der Flanschplatte 1 verschoben und dabei der mit dem Innenrohr 2 verbundene Außentopf 4 verformt wird, wobei der Außentopf 4 durch eine von der Verbindungsstelle mit dem Innenrohr 2 ausgehende Faltung 18 nach innen gestülpt wird. Mit der Verformung wird die Aufprallenergie in die zur Verformung nötige Arbeit umgewandelt und somit absorbiert. Mit der Verschiebung des Innenrohrs 2 in Richtung der Flanschplatte 1 verformt sich im Wesentlichen gleichzeitig mit dem Außentopf 4 auch das Stülprohr 3. Dieses ist insoweit mit dem kegelförmigen, daher auch als Kegeltopf zu bezeichnenden Außentopf 4 vergleichbar, als dass es ebenfalls als ein Kegeltopf angesehen kann, welcher aber bereits einmal (bei der Fertigung) verformt wurde und sich nun durch die Bewegung seiner mit dem Innenrohr 2 stoffschlüssig verbundenen Öffnung 8 in Richtung der Flanschplatte 1 zurückverformt. Das Innenrohr 2 ist insgesamt steifer gegen einen Verformung ausgebildet als der Außentopf 4 oder das Stülprohr 3, so dass sich das Innenrohr 2 bei einem Aufprall im Wesentlichen nicht verformt, sondern lediglich in Richtung der Flanschplatte 1 verschoben wird.

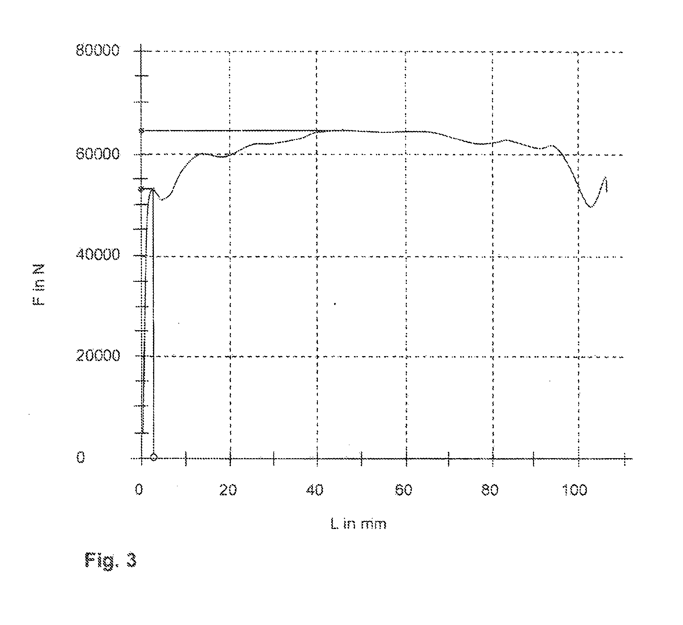

Durch den aufgrund der Beschaffenheit seines Formkörpers, mit den gewissermaßen hintereinander geschalteten Kegeltöpfen (Außentopf 4 und Stülprohr 3), bei dem Absorberelement erzwungenen Verformungsverlauf wird die in der Fig. 3 dargestellte, sehr gleichmäßig verlaufende Absorptionskennlinie erreicht. Wie aus der Fig. 3 zu ersehen, ist dabei die auf das System während der Verformung wirkende Einschubkraft über einen sehr weiten Verformungsbereich weitgehend konstant, so dass die Kennlinie über einen langen Abschnitt parallel zur Abszisse verläuft.

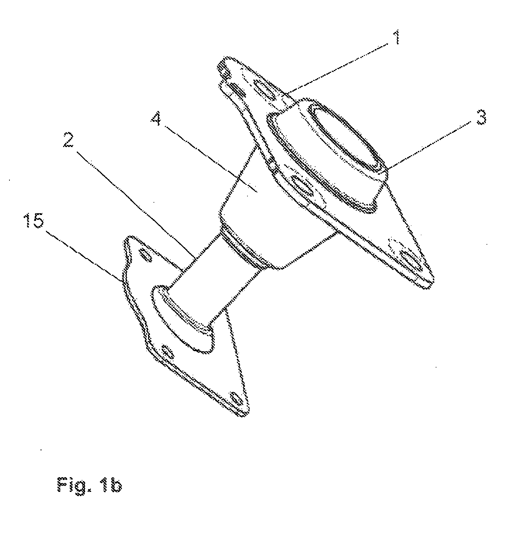

In der Fig. 1b ist das in der Fig. 1a gezeigte Ausführungsbeispiel nochmals in einer räumlichen Darstellung gezeigt. Hier sind der axial symmetrische Verformungskörper 2, 3, 4 und die an seinen Enden angeordneten Platten 1, 15, nämlich die Flanschplatte 1 zur Befestigung des Absorberelements an der Fahrzeugkarosserie und die Halteplatte 15 zur Befestigung des Querträgers eines Stoßfängers, nochmals gut zu erkennen. Über die Platten 1, 15 kann das Absorberelement einerseits am Längsträger einer Fahrzeugkarosserie und andererseits an einem Querträger eines Stoßfängers angeschraubt werden. Im Falle eines Aufpralls bewegt sich das dabei in Richtung der Flanschplatte 1 nach hinten verschobene Innenrohr 2 des Verformungskörpers 2, 3, 4 unter Einfaltung zunächst des Außentopfes 4 und dann des Stülprohrs 3 aus dem auf der der Halteplatte 1 abgewandten Seite offenen Stülprohr 3 hinaus und in den (hier nicht gezeigten) beim bestimmungsgemäßen Einbau hinter der Flanschplatte angeordneten Hohlraum eines Längsträgers des Kraftfahrzeugs hinein.

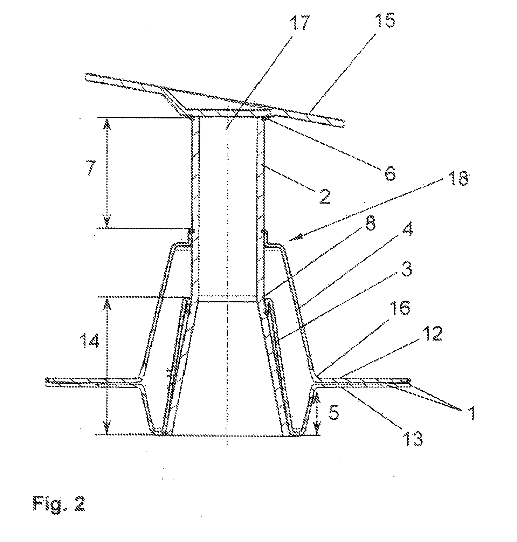

Die Fig. 2 zeigt eine gegenüber der Fig. 1a geringfügig modifizierte Ausbildungsform des erfindungsgemäßen Absorberelements. Es handelt sich hierbei um eine gegenüber der Ausbildungsform nach der Fig. 1a insoweit etwas kostengünstigere Variante des Absorberelements, als bei diesem auf eine gesonderte, zwischen dem der Halteplatte 15 abgewandten Ende 16 des Außentopfes 4 und dem umgestülpten Abschnitt 5 des Stülprohrs 3 angeordnete Flanschplatte 1 verzichtet wurde. Bei dieser Ausbildungsform wird die Flanschplatte 1 vielmehr gewissermaßen als integraler Bestandteil des Verformungskörpers 2, 3, 4 ausgebildet, indem dessen Außentopf 4 auf der der Halteplatte 1 abgewandten Seite und das Stülprohr 3, angeformt an den umgestülpten Abschnitt 5, jeweils einen sich quer zur Längsachse 17 und radial nach außen erstreckenden Kragen 12, 13 aufweisen. Unter Ausbildung der Flanschplatte 1 sind der Außentopf 4 und das Stülprohr 3 an ihren auskragenden Abschnitten durch eine Schweißverbindung miteinander verbunden. Im Hinblick darauf, dass sich diese Flanschplatte 1 beim bestimmungsgemäßen Einbau des Absorberelements an dem an ihr anliegenden Längsholm des Kraftfahrzeugs abstützt, sind hinsichtlich des Verformungsverhaltens des Absorberelements gegenüber der Ausbildungsform nach Fig. 1a kaum Änderungen zu erwarten, während jedoch eine signifikante Kosteneinsparung erreicht wird.

### Bezugszeichenliste

- 1: Flanschplatte
- 2, 3, 4: Verformungskörper

- 2: Innenrohr
- 3: Stülprohr
- 4: Außentopf

- 5: umgestülpter bzw. nach außen gestülpter Abschnitt
- 6: Ende des Innenrohrs
- 7: Abschnitt
- 8: Öffnung
- 9, 10: Seite der Flanschplatte
- 11: Ausnehmung
- 12, 13: Kragen
- 14: Abschnitt
- 15: Halteplatte
- 16: Ende des Außentopfes
- 17: Längsachse
- 18: Faltung

## Patentansprüche

1. Absorberelement, mit einer Flanschplatte (1) und einem Verformungskörper (2, 3, 4), welches zur Absorption bei einem Aufprall über ein von dem Absorberelement gehaltenes Prallelement auf ein zu schützendes Objekt einwirkender Energie zwischen dem zu schützenden Objekt und dem Prallelement anzuordnen ist und welches dazu mittels der Flanschplatte (1) unter Abdeckung eines Hohlraums an dem zu schützenden Objekt zu befestigen und an einem der Flanschplatte (1) gegenüberliegenden axialen Ende (6) des Verformungskörpers (2, 3, 4) mit dem Prallelement zu verbinden ist, **dadurch gekennzeichnet, dass** der Verformungskörper (2, 3, 4) aus einem hohlzylindrischen Innenrohr (2), einem Stülprohr (3) mit einem nach außen gestülpten Abschnitt (5) und einem Außentopf (4) besteht, welche derart teilweise ineinander verschachtelt sind, dass ein mit dem Prallelement zu verbindender Abschnitt (7) des Innenrohrs (2) außerhalb des Stülprohrs (3) und des Außentopfes (4) angeordnet ist und das Innenrohr (2) an seiner der Flanschplatte (1) zugewandten Seite in den Außentopf (4) sowie im weiteren Verlauf seiner axialen Erstreckung zumindest in eine Öffnung (8) des teilweise in dem Außentopf (4) angeordneten, jedoch mit dem umgestülpten Abschnitt (5) aus ihm herausragenden Stülprohrs (3) hineinragt, wobei das Innenrohr (2) stoffschlüssig mit der Öffnung (8) des Stülprohrs (3) und im Bereich seines Eintritts in den Außentopf (4) stoffschlüssig mit dem Außentopf (4) verbunden ist und wobei das dem Prallelement abgewandte Ende (16) des Außentopfes (4) an der Flanschplatte (1) mit dem aus dem Außentopf (4) herausragenden und in Richtung des vorgenannten Endes (16) des Außentopfes (4) umgestülpten Abschnitt (5) des Stülprohrs (3) verbunden ist.

2. Absorberelement nach Anspruch 1, **dadurch gekennzeichnet, dass** sich der Außentopf (4) und/oder das Stülprohr (2) in Richtung der Flanschplatte (5) in ihrem Querschnitt konisch erweitern.

3. Absorberelement nach Anspruch 1 oder 2, **dadurch gekennzeichnet, dass** die Flanschplatte (1) von einer zwischen dem Außentopf (4) an seinem dem Prallelement abgewandten Ende (16) und dem nach außen gestülpten Abschnitt (5) des Stülprohrs (3) angeordneten Platte ausgebildet ist, welche auf ihrer dem Prallelement zugewandten Seite (9) stoffschlüssig mit dem Außentopf (4) und auf ihrer dem Prallelement abgewanden Seite (10) über den Rand des umgestülpten Abschnitts (5) stoffschlüssig mit dem Stülprohr (3) verbunden ist, wobei das Stülprohr (3) durch eine Ausnehmung (11) der Flanschplatte (1) hindurch in den Außentopf (4) hineinragt.

4. Absorberelement nach Anspruch 1 oder 2, **dadurch gekennzeichnet, dass** die Flanschplatte (1) von einem an den Außentopf (4) an seinem Ende (16) und/oder von einem am Ende des umgestülpten Abschnitts (5) an das Stülprohr (3) angeformten, sich quer zur Längsachse (17) des Absorberelements radial nach außen erstreckenden Kragen .(12, 13) ausgebildet ist, wobei der Außentopf (4) und das Stülprohr (3) an dem oder den Kragen (12, 13) unmittelbar stoffschlüssig miteinander verbunden sind.

5. Absorberelement nach einem der Ansprüche 1 bis 4, **dadurch gekennzeichnet, dass** das Innenrohr (2) über die Öffnung (8) des Stülprohrs (3) hinaus verlängert ist und bis zu dem umgestülpten Abschnitt (5) in das Stülprohr (3) hineinragt.

6. Absorberelement nach Anspruch 5 mit einem in Richtung der Flanschplatte (1) sich in seinem Querschnitt konisch erweiternden Stülprohr (3), **dadurch gekennzeichnet, dass** das Innenrohr (2) in dem in das Stülprohr (3) hineinragenden Abschnitt (14) ebenfalls konisch erweitert ist.

7. Absorberelement nach Anspruch 6, **dadurch gekennzeichnet, dass** die äußere Mantelfläche des Innenrohrs (2) in dem in das Stülprohr (3) hineinragenden Abschnitt (14) an der Innenfläche des Stülprohrs (3) anliegt.

8. Absorberelement nach einem der Ansprüche 1 bis 7, **dadurch gekennzeichnet, dass** an dem der Flanschplatte (1) abgewandten Ende (6) des Innenrohrs (2) eine stoffschlüssig mit dem Innenrohr (2) verbundene, sich quer oder geneigt zur Längsachse (17) des Innenrohrs erstreckende und das Innenrohr (2) verschließende Halteplatte (15) angeordnet ist, über die das Innenrohr (2) mit dem Prallelement verbindbar ist.

9. Absorberelement nach einem der Ansprüche 1 bis 8, **dadurch gekennzeichnet, dass** die das Absorberelement ausbildenden Teile aus Stahl bestehen.

10. Absorberelement nach einem der Ansprüche 1 bis 9, **dadurch gekennzeichnet, dass** die das Absorberelement ausbildenden Teile aus Aluminium bestehen.

11. Absorberelement nach Anspruch 9 oder 10, **dadurch gekennzeichnet, dass** der Stoffschluss zwischen den Teilen des Absorberelements jeweils durch eine Schweißverbindung gegeben ist.

## Claims

1. Absorber element, with a flange plate (1) and a deformation body (2, 3, 4) which, for absorbing energy acting on an object to be protected in the event of an impact via an impact element held by the absorber element, is to be arranged between the object to be protected and the impact element and which, for this purpose, is to be fastened to the object to be protected by means of the flange plate (1), with a cavity being covered, and is to be connected to the impact element at an axial end (6) of the deformation body (2, 3, 4), which end is opposite the flange plate (1), **characterized in that** the deformation body (2, 3, 4) consists of a hollow-cylindrical inner tube (2), a reverse-drawn tube (3) with a section (5) turned back outwards, and an outer cup (4), which are partially nested one inside another in such a manner that a section (7) of the inner tube (2) that is to be connected to the impact element is arranged outside the reverse-drawn tube (3) and the outer cup (4), and the inner tube (2) projects on the side thereof which faces the flange plate (1) into the outer cup (4) and, over the further course of the axial extent thereof, projects at least into an opening (8) in the reverse-drawn tube (3), which is partially arranged in the outer cup (4) but projects out therefrom by means of the inverted section (5), wherein the inner tube (2) is connected in an integrally bonded manner to the opening (8) in the reverse-drawn tube (3) and, in the region of its entry into the outer cup (4), is connected in an integrally bonded manner to the outer cup (4), and wherein that end (16) of the outer cup (4) which faces away from the impact element is connected on the flange plate (1) to the section (5) of the reverse-drawn tube (3), which section projects out of the outer cup (4) and is inverted in the direction of the aforementioned end (16) of the outer cup (4).

2. Absorber element according to Claim 1, **characterized in that** the cross section of the outer cup (4) and/or of the reverse-drawn tube (2) widens conically in the direction of the flange plate (5).

3. Absorber element according to Claim 1 or 2, **characterized in that** the flange plate (1) is formed by a plate which is arranged between the outer cup (4), at its end (16) facing away from the impact element, and the outwardly turned-back section (5) of the reverse-drawn tube (3) and which, on its side (9) facing the impact element, is connected in an integrally bonded manner to the outer cup (4) and, on its side (10) facing away from the impact element, is connected in an integrally bonded manner to the reverse-drawn tube (3) via the edge of the inverted section (5), wherein the reverse-drawn tube (3) projects into the outer cup (4) through a recess (11) in the flange plate (1).

4. Absorber element according to Claim 1 or 2, **characterized in that** the flange plate (1) is formed by a collar (12, 13) which is integrally formed at the end (16) of the outer cup (4) and/or by a collar (12, 13) which is integrally formed on the reverse-drawn tube (3) at the end of the inverted section (5) and extends radially outwards transversely with respect to the longitudinal axis (17) of the absorber element, wherein the outer cup (4) and the reverse-drawn tube (3) are directly connected to each other in an integrally bonded manner at the collar or the collars (12, 13).

5. Absorber element according to one of Claims 1 to 4, **characterized in that** the inner tube (2) is extended beyond the opening (8) in the reverse-drawn tube (3) and projects into the reverse-drawn tube (3) as far as the inverted section (5).

6. Absorber element according to Claim 5 with a reverse-drawn tube (3), the cross section of which conically widens in the direction of the flange plate (1), **characterized in that** the inner tube (2) is likewise conically widened in the section (14) projecting into the reverse-drawn tube (3).

7. Absorber element according to Claim 6, **characterized in that** the outer circumferential surface of the inner tube (2) in the section (14) projecting into the reverse-drawn tube (3) bears against the inner surface of the reverse-drawn tube (3).

8. Absorber element according to one of Claims 1 to 7, **characterized in that** a retaining plate (15) which is connected in an integrally bonded manner to the inner tube (2), extends transversely or at an inclination with respect to the longitudinal axis (17) of the inner tube, closes the inner tube (2) and via which the inner tube (2) is connectable to the impact element is arranged at that end (6) of the inner tube (2) which faces away from the flange plate (1).

9. Absorber element according to one of Claims 1 to 8, **characterized in that** the parts forming the absorber element are composed of steel.

10. Absorber element according to one of Claims 1 to 9, **characterized in that** the parts forming the absorber element are composed of aluminium.

11. Absorber element according to Claim 9 or 10, **characterized in that** the integral bond between the parts of the absorber element is provided in each case by means of a welded joint.

## Revendications

1. Elément absorbant, comprenant une plaque formant bride (1) et un corps de déformation (2, 3, 4), lequel doit être disposé, en vue de l'absorption de l'énergie agissant sur un objet à protéger en cas de collision par le biais d'un élément de collision maintenu par l'élément absorbant, entre l'objet à protéger et l'élément de collision, et qui doit être fixé à cet effet au moyen de la plaque formant bride (1) en recouvrant une cavité sur l'objet à protéger et connecté, au niveau d'une extrémité axiale (6) du corps de déformation (2, 3, 4) opposée à la plaque formant bride (1), à l'élément de collision, **caractérisé en ce que** le corps de déformation (2, 3, 4) se compose d'un tube interne (2) cylindrique creux, d'un tube inversé (3) avec une portion retournée vers l'extérieur (5) et un pot extérieur (4), lesquels sont emboîtés l'un dans l'autre en partie de telle sorte qu'une portion (7) du tube interne (2) devant être reliée à l'élément de collision soit disposée à l'extérieur du tube inversé (3) et du pot extérieur (4), et que le tube interne (2), au niveau de son côté tourné vers la plaque formant bride (1) pénètre dans le pot extérieur (4) et, en poursuivant le long de son étendue axiale, au moins dans une ouverture (8) du tube inversé (3) disposé en partie dans le pot extérieur (4), mais saillant hors de celui-ci par la portion retournée (5), le tube interne (2) étant connecté par engagement par liaison de matière à l'ouverture (8) du tube inversé (3) et étant connecté dans la région de son entrée dans le pot extérieur (4) par engagement par liaison de matière au pot extérieur (4), et l'extrémité (16) du pot extérieur (4) opposée à l'élément de collision étant connectée au niveau de la plaque formant bride (1) à la portion (5) du tube inversé (3) saillant hors du pot extérieur (4) et retournée dans la direction de l'extrémité susmentionnée (16) du pot extérieur (4).

2. Elément absorbant selon la revendication 1, **caractérisé en ce que** le pot extérieur (4) et/ou le tube inversé (2) s'élargissent coniquement en section transversale dans la direction de la plaque formant bride (1).

3. Elément absorbant selon la revendication 1 ou 2, **caractérisé en ce que** la plaque formant bride (1) est réalisée par une plaque disposée entre le pot extérieur (4) au niveau de son extrémité (16) opposée à l'élément de collision et la portion (5) du tube inversé (3) retournée vers l'extérieur, laquelle plaque est connectée sur son côté (9) tourné vers l'élément de collision, par engagement par liaison de matière au pot extérieur (4) et sur son côté (10) opposé à l'élément de collision par le biais du bord de la portion retournée (5) par engagement par liaison de matière au tube inversé (3), le tube inversé (3) pénétrant à travers un évidement (11) de la plaque formant bride (1) à travers le pot extérieur (4).

4. Elément absorbant selon la revendication 1 ou 2, **caractérisé en ce que** la plaque formant bride (1) est réalisée par un collet (12, 13) s'étendant radialement vers l'extérieur transversalement à l'axe longitudinal (17) de l'élément absorbant, formé au niveau du pot extérieur (4) à son extrémité (16) et/ou formé à l'extrémité de la portion retournée (5) sur le tube inversé (3), le pot extérieur (4) et le tube inversé (3) étant connectés l'un à l'autre directement par engagement par liaison de matière au niveau du ou des collets (12, 13).

5. Elément absorbant selon l'une quelconque des revendications 1 à 4, **caractérisé en ce que** le tube interne (2) est prolongé au-delà de l'ouverture (8) du tube inversé (3) et pénètre dans le tube inversé (3) jusqu'à la portion retournée (5).

6. Elément absorbant selon la revendication 5, comprenant un tube inversé (3) s'élargissant coniquement en section transversale dans la direction de la plaque formant bride (1), **caractérisé en ce que** le tube interne (2) est également élargi coniquement dans la portion (14) pénétrant dans le tube inversé (3).

7. Elément absorbant selon la revendication 6, **caractérisé en ce que** la surface d'enveloppe extérieure du tube interne (2) s'applique dans la portion (14) pénétrant dans le tube inversé (3) contre la surface interne du tube inversé (3).

8. Elément absorbant selon l'une quelconque des revendications 1 à 7, **caractérisé en ce qu'**au niveau de l'extrémité (6) du tube interne (2) opposée à la plaque formant bride (1) est disposée une plaque de retenue (15) connectée par engagement par liaison de matière au tube interne (2), s'étendant transversalement ou de manière inclinée par rapport à l'axe longitudinal (17) du tube interne et fermant le tube interne (2), par le biais de laquelle plaque de retenue (15) le tube interne (2) peut être connecté à l'élément de collision.

9. Elément absorbant selon l'une quelconque des revendications 1 à 8, **caractérisé en ce que** les pièces constituant l'élément absorbant se composent d'acier.

10. Elément absorbant selon l'une quelconque des revendications 1 à 9, **caractérisé en ce que** les pièces constituant l'élément absorbant se composent d'aluminium.

11. Elément absorbant selon la revendication 9 ou 10, **caractérisé en ce que** l'engagement par liaison de matière entre les pièces de l'élément absorbant est réalisé à chaque fois par une connexion soudée.
